# EUROPEAN PATENT APPLICATION

(11) **EP 2 343 122 A1**
(43) Date of publication of application: **13.07.2011**
(21) Application number: 09820632.9
(22) Date of filing: 16.10.2009
(51) Int. Cl.: B01J 23/58, B01D 53/94, F01N 3/10

(54) **EXHAUST GAS PURIFYING CATALYST AND METHOD FOR PURIFYING EXHAUST GAS USING THE CATALYST**

(30) Priority: 17.10.2008 JP 2008268762
(71) Applicant: ICT Co., Ltd., Osaka 541-0043 (JP); International Catalyst Technology, Inc., Auburn Hills, MI 48326 (US)
(72) Inventor: ONO, Mariko, Himeji-shi Hyogo 671-1292 (JP); OKUMURA, Akihisa, Himeji-shi Hyogo 671-1292 (JP)
(74) Representative: Barrett, Jennifer Catherine
(86) International application number: PCT/JP2009/067891
(87) International publication number: WO 2010/044454

(57) **Abstract**

A catalyst for exhaust gas purification of the present invention contains the thin-plate-like ceria (CeO₂) as a catalytic active component. According to the catalyst for exhaust gas purification of the present invention, among CO, HC, and NOx, which are hazardous components contained in exhaust gas, particularly, NOx, can be removed efficiently. The present invention can be used as, what is called a NOx trapping catalyst, which stores NOx in oxidizing atmosphere, and discharges and reduces NOx in reducing atmosphere.

## Description

### TECHNICAL FIELD

The present invention relates to a catalyst for exhaust gas purification and a method for purifying exhaust gas using the said catalyst. In more detail, the present invention relates to the catalyst for exhaust gas purification aiming at removing particularly nitrogen oxides (NOx), among hazardous components contained in exhaust gas of a gasoline engine and a diesel engine, and the method for purifying exhaust gas using the said catalyst.

### BACKGROUND ART

NOx in atmosphere causes photochemical smog or acid rain. Therefore, emission of NOx from a mobile generation source such as an automobile equipped with an internal combustion engine such as a gasoline engine or a diesel engine, which is one of NOx generation sources, has become a social problem. For this reason, investigation has been progressed in a direction of making a law and regulations on amount of NOx emission severer in the future. Accordingly, development of the catalyst for exhaust gas purification has been attracted attention.

For example, in US-A-5244852, it has been disclosed that NOx can be adsorbed by using zeolite which supports a noble metal.

### DISCLOSURE OF INVENTION

### [PROBLEM TO BE SOLVED BY THE INVENTION]

In the catalyst system disclosed in the above US-A-5244852, zeolite is used as a alternative of rhodium, aiming at reducing use amount of rhodium, which is a particularly rare and expensive resource, among noble metal components. However, because of no establishment of optimization as an adsorbing material, there is a problem of insufficient adsorption effect. In addition, because of low concentration of palladium in the catalyst, it has insufficient ignition capability and purification capability, and has thus such defect that is not able to effectively purify high concentration hazardous components eliminated from the adsorption material with an engine warming.

The present invention has been proposed, in view of the above circumstances, and aims at providing the catalyst for exhaust gas purification aiming at efficiently removing carbon monoxide (CO), a hydrocarbon (HC) and nitrogen oxides (NOx), which are hazardous components contained in exhaust gas, particularly NOx.

### [MEANS FOR SOLVING THE PROBLEM]

The present inventors have intensively studied a way to attain the above-described objects and found, as a result, that, by using thin-plate-like ceria in a catalyst as a catalytic active component, among CO, HC, and NOx, which are hazardous components contained in exhaust gas, particularly, NOx can be efficiently removed, and have thus completed the present invention.

That is, the above object is attained by a catalyst for exhaust gas purification containing thin-plate-like ceria (CeO₂) as a catalytic active component.

In addition, the above object is also attained by a method for producing the catalyst for exhaust gas purification, having:
(1) dispersing the catalytic active component comprising the thin-plate-like ceria (CeO₂) into an aqueous medium and carrying out wet milling to obtain slurry, and then immersing the three-dimensional structure into the resultant slurry, removing the excess slurry, drying and calcining;
(2) dispersing a noble metal-supported refractory inorganic oxide and the thin-plate-like ceria (CeO₂) into the aqueous medium, carrying out wet milling to obtain slurry, and then immersing the three-dimensional structure into the slurry, removing the excess slurry, drying and calcining;
(3) dispersing a refractory inorganic oxide and the thin-plate-like ceria (CeO₂) into the aqueous medium, carrying out wet milling to obtain slurry, then immersing the three-dimensional structure into the slurry, removing the excess slurry, drying and/or calcining, then immersing the three-dimensional structure obtained by drying/calcining in this way into an aqueous solution of a water-soluble noble metal salt, removing the excess aqueous solution, drying and calcining; or
(4) mixing slurry obtained by dispersing the thin-plate-like ceria (CeO₂) into the aqueous medium and then wet milling and slurry obtained by dispersing other catalytic active components into the aqueous medium and wet milling, immersing the three-dimensional structure into the resultant mixture, removing the excess mixture, drying and calcining.

Still more, the above object is also attained by a method for purifying exhaust gas having a step for making exhaust gas contacted to the catalyst for exhaust gas purification of the present invention.

### [ADVANTAGES OF THE INVENTION]

By using the catalyst of the present invention, among CO, HC, and NOx, which are hazardous components contained in exhaust gas, particularly, NOx can be removed efficiently. The present invention can be used as, what is called a NOx trapping catalyst, which stores NOx in oxidizing atmosphere, and discharges and reduces NOx in reducing atmosphere.

### BEST MODE FOR CARRYING OUT THE INVENTION

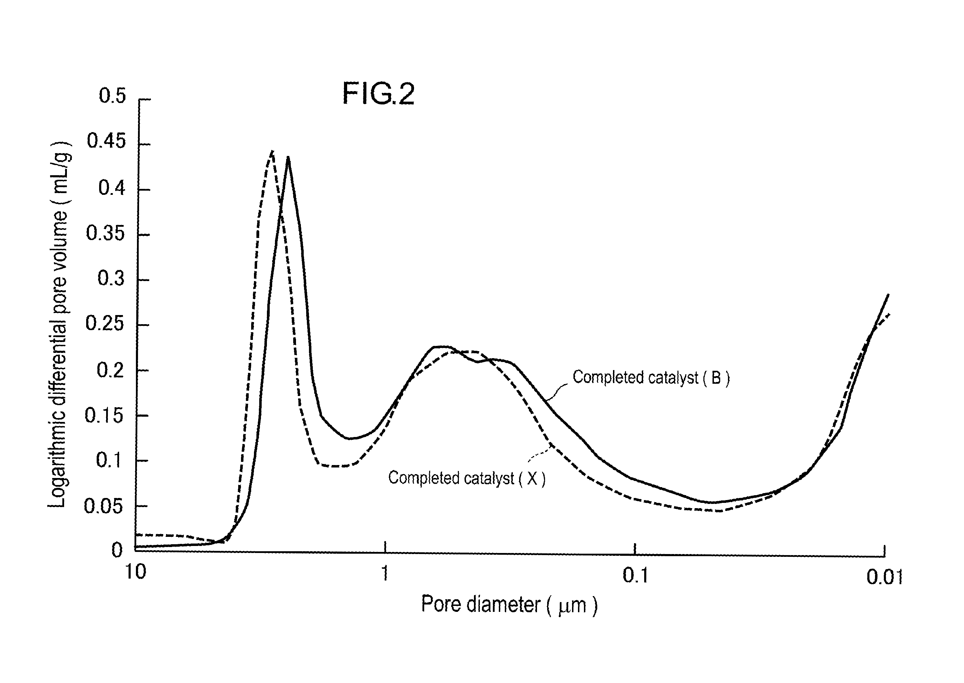

According to a first aspect of the present invention, the catalyst for exhaust gas purification having the thin-plate-like ceria (CeO₂) as the catalytic active component is provided. Ceria has conventionally been used in a particle-like or powder-like form. Different from conventional art, the present invention is characterized by using the thin-plate-like ceria. Use of the thin-plate-like ceria in this way enhances removal efficiency of particularly NOx, as compared with the case of using conventional particle-like/powder-like ceria. Mechanism, that such result can be obtained, is not clear, however, it is considered as follows. It should be noted that, the present invention should not be limited by the following discussion. When exhaust gas contacts with the catalyst layer, diffusion of exhaust gas inside the catalyst layer generates. The more easy diffusion of exhaust gas increases the more amount of exhaust gas, which the catalyst is able to treat within unit time, and is thus preferable. The catalyst layer has pores, which particles composing the catalyst layer have themselves, or pore volume distribution based on space between the particles, depending on composition thereof. Diffusion of exhaust gas to the inside of catalyst layer is influenced by pore volume or pore distribution of the catalyst layer. On the contrary, the thin-plate-like ceria has characteristics in that lengths in a plane direction and a thickness direction are different significantly, that is, shape anisotropy is large. Therefore, use of the thin-plate-like ceria as a catalytic active component increases mainly inter-particle space, and changes pore volume distribution, caused by shape anisotropy thereof, as compared with conventional particle-like/powder-like ceria. Therefore, diffusion of exhaust gas into the inside of the catalyst layer enhances, and thus superior purification capability for CO, HC and NOx, which are hazardous components contained in exhaust gas, particularly NOx, can be attained. It should be noted that, as for the catalyst using the thin-plate-like ceria as a catalytic active component, and a catalyst using conventional powder-like ceria, a measurement example of pore volume distribution by mercury intrusion technique is shown in Fig. 2. The catalyst (complete catalyst (B)) used the thin-plate-like ceria has larger pore volume in a range of 0.05 to 1 µm, as compared with the catalyst (complete catalyst (X)) used conventional powder-like ceria.

Explanation will be given below on the present invention in detail. Ceria (CeO₂) relevant to the present invention is characterized in that shape thereof is thin-plate-like. It should be noted that, in the present description, "thin-plate-like" means shape wherein an average diameter equivalent to a circle of a planar direction, is 2 or more, relative to thickness of the thin-plate. A size of the thin-plate is not especially limited. It is preferable that the average diameter equivalent to a circle of a planar direction, is preferably 2 to 50 µm, more preferably 2 to 10 µm, and still more preferably 2 to 6 µm, and an average thickness of the thin-plate is preferably 0.01 to 1 µm, and more preferably 0.01 to 0.75 µm. The thin-plate-like ceria with such a size is easy to handle as a catalytic active component in the catalyst. It should be noted that, as a measurement method for the size of the thin-plate, a usual method may be used, and for example, an image analysis method, a laser diffraction scattering method or the like is used preferably. In the present description, "the average diameter (µm) equivalent to a circle of a planar direction of the thin-plate-like ceria" is a value obtained by measuring area of a plane direction of each particle (30 in total) by the image analysis method, and calculating diameter of a circle having the same area thereto, and determining an average value thereof. In addition, "the average thickness (µm)" is a value obtained by measuring area (S µm²) and length (L µm) of a thickness direction of each particle (30 in total) by the image analysis method, and calculating thickness (S/L) by dividing the area with the length, and determining an average value thereof.

A production method for the thin-plate-like ceria relevant to the present invention is not especially limited. Specifically, for example, the thin-plate-like ceria is obtained by dissolving cerium acetate into an ethylene glycol solution containing citric acid, and making a thin film of polymer gel obtained by concentration under heating, by a spin coating method, then calcining.

In the present invention, a use amount of the thin-plate-like ceria (as will be described later in detail, in the case where the catalytic active components cover the three-dimensional structure, a supported amount to the three-dimensional structure; the same hereafter) is not especially limited. Specifically, the use amount (supported amount) of the thin-plate-like ceria is 10 to 200 g, and more preferably, 10 to 100 g per 1 litter (L) of the catalyst (for example, the three-dimensional structure). In the present description, the use amount (supported amount) of the thin-plate-like ceria below the lower limit does not provide sufficient dispersion of the thin-plate-like ceria, and may not provide sufficient diffusion property of exhaust gas. On the contrary, the amount over the upper limit does not attain effect comparable to the addition of the thin-plate-like ceria, and may decrease mechanical strength of the catalyst layer.

The catalyst for exhaust gas purification of the present invention can contain the refractory inorganic oxide as a catalytic active component. The refractory inorganic oxide is not especially limited, as long as it is any one which may be used for a catalyst for a usual internal combustion engine. Specifically, the refractory inorganic oxide which may be used in the present invention is any one, which is used as a usual catalyst carrier, and, for example, a single oxide such as activated alumina such as α-alumina, γ-alumina, δ-alumina, η-alumina, or θ-alumina; titania, zirconia, silicon oxide (silica); and a composite oxide thereof, for example, alumina-titania, alumina-zirconia, titania-zirconia, zeolite, silica-alumina, and the like may be included. Preferably, the single oxide such as γ-alumina, silica, titania, or zirconia, and the composite oxide thereof is used. The above refractory inorganic oxide may be used alone or may be used as a mixture form of two or more kinds.

BET (Brunauer-Emmett-Teller) specific surface area of the refractory inorganic oxide is not especially limited, however, it is preferably 20 to 750 m²/g, and more preferably 50 to 350 m²/g. In addition, average particle diameter of the refractory inorganic oxide is also not especially limited, however, it is preferably 0.5 to 150 µm, and more preferably 1 to 100 µm. It should be noted that, in the present description, "average particle diameter" can be measured by average value of particle diameter of powder of the refractory inorganic oxide, measured by a known method such as a laser diffraction method or a dynamic light scattering method.

In the case of using the refractory inorganic oxide, a use amount (supported amount) of the refractory inorganic oxide is not especially limited. The use amount (supported amount) of the refractory inorganic oxide is preferably 10 to 400 g, and more preferably 50 to 300 g, per 1 litter (L) of the catalyst (for example, the three-dimensional structure). The amount below 10 g does not provide sufficient dispersion of the catalytic active components (for example, the thin-plate-like ceria or a noble metal to be described in detail below), and may not provide sufficient durability. On the contrary, the amount over 400 g does not provide effect comparable to the addition of the refractory inorganic oxide, and also does not exert sufficient effect of the catalytic active components (for example, the thin-plate-like ceria or the noble metal to be described in detail below), and may decrease activity or increase pressure loss.

The catalyst for exhaust gas purification of the present invention can further contain the noble metal, instead of the above refractory inorganic oxide, or in addition to the above refractory inorganic oxide. The noble metal which can be used in the present invention is not especially limited, and can be selected as appropriate, depending on hazardous components to be purified (removed). For example, as the noble metal which may be used preferably, platinum (Pt), palladium (Pd), rhodium (Rh), iridium (Ir), ruthenium (Ru) or the like is included. Among these, preferably Pt, Pd, Rh and Ir are used, and Pt, Pd and Rh are more preferable.

In the case of further using the noble metal, a use amount (supported amount) of the noble metal is not especially limited, and can be selected as appropriate, depending on concentration of hazardous components to be purified (removed). Specifically, the noble metal may be used in an amount of preferably 0.1 to 15 g, and more preferably 0.5 to 5 g, per 1 litter (L) of the catalyst (for example, the three-dimensional structure). Such a range may remove (purify) the hazardous component sufficiently.

The catalyst for exhaust gas purification of the present invention can use, instead of the above refractory inorganic oxide or the noble metal, or in addition to the refractory inorganic oxide and/or the noble metal, at least one kind of an oxide of element selected from the group consisting of alkali metals, alkaline earth metals, rare earth elements, manganese and tungsten (hereinafter also referred to as "the other oxide"). As the alkali metal oxide used in the present description, an oxide of sodium, potassium, rubidium, or cesium is included. Similarly, as the alkaline earth metal oxide, an oxide of strontium or barium is included. As the oxide of the rare-earth element, for example, an oxide of the rare-earth element selected from the group consisting of cerium, lanthanum, praseodymium, neodymium, samarium, europium, gadolinium, terbium, dysprosium, holmium, erbium or the like is included. The above other oxide may be used alone or may be used as a mixture form of two or more kinds. Among these, the alkali metal oxide, the alkaline earth metal oxide and the oxide of the rare-earth element are preferable. More preferably, there is included sodium oxide, potassium oxide, barium oxide, ceria or lanthanum oxide, and particularly preferably, potassium oxide, barium oxide or ceria. It should be noted that, "ceria" used here is not thin-plate-like ceria relevant to the present invention, but means known particle-like/powder-like ceria. That is, "ceria" used in the present paragraph has, for example, the average particle diameter of preferably 0.1 to 100 µm and more preferably 0.5 to 20 µm, and the BET specific surface area of preferably 10 to 300 m²/g and more preferably 50 to 300 m²/g. It should be noted that, "average particle diameter" of the other oxides in the present invention can be measured by average value of particle diameter of powder of the refractory inorganic oxide, measured by a known method such as a laser diffraction method or a dynamic light scattering method.

In the present invention, in the case where the catalytic active component uses the other oxides as described above, a use amount (supported amount) of the other oxide is not especially limited. For example, in the case of using the other oxides instead of the refractory inorganic oxide, similar amount as the above refractory inorganic oxide can be used, and more specifically, it is preferable to be about 10 to 400 g, per 1 litter (L) of the catalyst (for example, the three-dimensional structure). In addition, in the case of using the other oxides in addition to the refractory inorganic oxide, the use amount (supported amount) of the other oxides is preferably about 5 to 200 g, per 1 litter (L) of the catalyst (for example, the three-dimensional structure). The use amount (supported amount) of the other oxides below the above lower limit does not provide sufficient dispersion of the other oxides, and may not provide effect comparable to the addition. On the contrary, the amount over the upper limit does not provide effect comparable to the addition amount of the other oxides, and also does not exert sufficient effect of the catalytic active components (for example, the thin-plate-like ceria or the noble metal described above), and may decrease activity.

It is an indispensable constituent features that the catalytic active component relevant to the present invention contains thin-plate-like ceria, as described above, however, it can include a refractory inorganic oxide, other oxides and a noble metal, if necessary. In the case where the catalytic active component contains other components than thin-plate-like ceria in this way, use amount (supported amount) of the catalytic active components as total thereof is not especially limited, and it is preferable that use amount (supported amount) of each component is included within the above range. More preferably, the use amount (supported amount) of the catalytic active component is 10 to 400 g, still more preferably 10 to 300 g, per 1 litter (L) of the catalyst (for example, the three-dimensional structure). The catalyst of the present invention, when it is within such a range, can exert sufficient function by each component as described above.

It is preferable that in the catalyst for exhaust gas purification of the present invention, it is preferable that the above catalytic active component covers the three-dimensional structure. In the present description, the three-dimensional structure covered with the catalytic active components includes a heat resistant carrier such as a honeycomb carrier, and a one-piece-molded honeycomb structure is preferable, including, for example, a monolithic honeycomb carrier, a plug honeycomb carrier or the like. It should be noted that, a pellet carrier can also be used similarly, even not being the three-dimensional structure.

As the monolithic carrier, one usually called a ceramic honeycomb carrier is enough, and in particular, the honeycomb carrier made of a material such as cordierite, mullite, α-alumina, zirconia, titania, titanium phosphate, aluminum titanate, aluminosilicate, magnesium silicate, or silicon carbide is preferable, and among these, one made of cordierite is particularly preferable. In addition to these, what is called metal honeycomb carrier may also be used, which is a one-piece structure made by using an oxidation resistant and heat resistant metal such as stainless steel or a Fe-Cr-Al alloy. It should be noted that the plug-like honeycomb carrier may also be used, and the plug honeycomb is a honeycomb having a plurality of through holes and has an open hole and a closed hole checker-wise at a gas introducing face, where one side of the through hole is open while the other side of the same through hole is closed. The said plug honeycomb carrier has fine pores at the wall between each of the holes, and exhaust gas enters the honeycomb from the open holes and comes out the honeycomb through other hole through the said fine pores.

These monolithic carriers are produced by an extrusion molding method or a method for winding and fastening a sheet-like element. Shape of a gas passing port (cell shape) may be any of hexagonal shape, square shape, triangle shape or corrugation shape. A cell density (cell number/unit cross-sectional area) of 100 to 1200 cells/inch² is enough for use, and it is preferably 200 to 900 cells/inch², and more preferably 300 to 600 cells/inch².

A production method of the catalyst for exhaust gas purification of the present invention is not especially limited, and a known method may be used similarly or by modification as appropriate. Description will be given below on preferable embodiments of the preparation method of the catalyst of the present invention. However, the preparation method of the catalyst of the present invention should not be limited to the following procedures, as long as it does not depart from the gist of the present invention.

(1) The catalytic active components (for example, thin-plate-like ceria, the refractory inorganic oxide, the water-soluble noble metal salt, the other oxides and the like) are dissolved/dispersed in a suitable aqueous medium to obtain a catalytic active component solution or dispersed solution. Next, by carrying out wet milling of this catalytic active component solution/dispersed solution, slurry is prepared. Still more, by immersing the three-dimensional structure (for example, the honeycomb carrier) into the slurry, the excess slurry is removed, and then by drying and calcining, the catalyst is obtained. It should be noted that, in the method (1), in the case where the catalyst for exhaust gas purification of the present invention does not use the refractory inorganic oxide, the noble metal, or the other oxides, a similar method is applicable, except that the above component not to be used is not added.

In the above method, a suitable aqueous medium is not especially limited, and a suitable aqueous medium, which is usually used in the relevant field, is used similarly. Specifically, water, a lower alcohol such as cyclohexanol, ethanol, 2-propanol, and an organic alkaline aqueous solution or the like is included. Preferably, water, the lower alcohol is used, and particularly, water is preferably used. In this case, the addition amount of the catalytic active component is not especially limited, as long as it is such amount that can support desired amount onto the three-dimensional structure. It is preferably such amount that concentration of the catalytic active component in the aqueous medium becomes 5 to 75% by mass, and more preferably 15 to 55% by mass. In addition, wet milling of the catalytic active component solution/dispersed solution is carried out by a usually known method, and is not especially limited, however, a ball mill or the like is preferably used. Alternatively, a conventionally known means such as a homogenizer, an ultrasonic dispersing apparatus, a sand mill, a jet mill, or a beads mill can also be used. In addition, in carrying out wet milling, slurry may be prepared, wherein a part (for example, the refractory inorganic oxide, the aqueous noble metal salt, the other oxides and the like) of the catalytic active components is wet milled in advance to prepare an intermediate slurry, and by adding the residual catalytic active component (for example, thin-plate-like ceria or the like) to the resultant intermediate slurry, and then still more wet milling. It should be noted that, the supported amount of the catalytic active components onto the three-dimensional structure is not especially limited, however, such amount is preferable that is specified by the amount of the above each catalytic active component.

In addition, in the case where other catalytic active components are used in addition to thin-plate-like ceria relevant to the present invention, a form thereof is not especially limited, and it may be added as the form as it is, or may be added as other form and after that it may be converted to desired form. For example, in the case where the refractory inorganic oxide and the other oxides are used as the catalytic active components, it is preferable that the refractory inorganic oxide and the other oxides are added in the form as it is. On the other hand, in the case of using the noble metal as the catalytic active component, the noble metal may be added as the form as it is, however, it is preferably added as other form, particularly as a form of water-soluble noble metal salt, because it is added to the aqueous medium as described above. In the present description, the water-soluble noble metal is not especially limited, and raw materials which are used in a field of purification of exhaust gas can be used. Specifically, for example, in the case of palladium, there is included palladium; a halide such as palladium chloride; an inorganic salt of palladium such as a nitrate, a sulfate, a dinitrodiammine salt, or a teraammine salt; a carboxylate such as an acetate; and a hydroxide, an alkoxide, an oxide and the like. Preferably, the nitrate, the dinitrodiammine salt, the tetraammine salt or the acetate is included, and the nitrate (palladium nitrate) is more preferable. Also, in the case of platinum, for example, platinum; a halide such as platinum bromide or platinum chloride; an inorganic salt of platinum such as a dinitrodiammine salt, a hexaammine salt, a hexahydroxo acid salt, a tetranitro acid salt; a carboxylate such as an acetate; and a hydroxide, an alkoxide, an oxide or the like is included. Preferably, the dinitrodiammine salt, the hexaammine salt, or the hexahydroxo acid salt is included, and the dinitrodiammine salt (platinum dinitrodiammine) is more preferable. Further, for example, in the case of rhodium, rhodium; a halide such as rhodium chloride; an inorganic salt of rhodium such as a nitrate, a sulfate, a hexaammine salt, or a hexacyanate; a carboxylate such as an acetate; and a hydroxide, an alkoxide, an oxide or the like is included. Preferably, the nitrate, or the hexaammine salt is included, and the nitrate (rhodium nitrate) is more preferable. It should be noted that, in the present invention, the above noble metal source may be used alone or may be used as a mixture form of two or more kinds.

Next, the catalyst of the present invention is produced by supporting the catalytic active components onto the three-dimensional structure, and the supporting method for the catalytic active components onto the three-dimensional structure in this case is not especially limited, and a known method may be used similarly or by modification as appropriate. Specifically, the three-dimensional structure is charged and immersed into the slurry prepared as above. In this case, immersing condition is not especially limited, as long as it is such condition that the catalytic active components in the slurry are contacted sufficiently with the three-dimensional structure, and these catalytic active components are sufficiently supported on the three-dimensional structure in the next drying and calcining steps. For example, after immersing the three-dimensional structure into the slurry, the three-dimensional structure is pulled up from the slurry to remove excess slurry. After that, by drying it at 100 to 250°C for 10 minutes to 3 hours, then calcining at 350 to 600°C for 10 minutes to 5 hours, the catalyst for exhaust gas purification of the present invention, where the catalytic active components are supported on the three-dimensional structure, may be produced.

(2) By dissolving the water-soluble noble metal salt into water and supporting the noble metal onto to the refractory inorganic oxide, a noble metal-supported refractory inorganic oxide is obtained. Next, by dissolving/dispersing this noble metal-supported refractory inorganic oxide, the thin-plate-like ceria and the other oxides into a suitable aqueous medium, the catalytic active component solution/dispersed solution is obtained. Next, by wet milling of this catalytic active component solution/dispersed solution, slurry is obtained. Still more, by immersing the three-dimensional structure (for example, the honeycomb carrier) into the slurry, removing the excess slurry, drying and calcining, the catalyst is obtained. It should be noted that, in the method of (2), in the case where the catalyst for exhaust gas purification of the present invention does not use the noble metal, the refractory inorganic oxide, or the other oxides, a similar method is applicable except that the above component not to be used is not added. In addition, terms are defined similarly as in the above method (1), unless otherwise specified.

In the above, the addition amount of the water-soluble noble metal salt into water is not especially limited, and such amount is preferable that is specified by the amount of the noble metal.

In the present description, the supporting method for the noble metal onto the refractory inorganic oxide is not especially limited, and a known catalyst supporting method is used similarly or by modification as appropriate. Specifically, the noble metal-supported refractory inorganic oxide is obtained by immersing the refractory inorganic oxide into an aqueous solution of the water-soluble noble metal salt prepared as above, and then by drying and calcining. In this case, immersing condition is not especially limited, as long as it is such condition that the water-soluble noble metal salt in the aqueous solution is sufficiently supported onto the refractory inorganic oxide. For example, the refractory inorganic oxide is mixed sufficiently uniformly with the aqueous solution of the water-soluble noble metal in an amount equal to the maximum moisture amount, which the refractory inorganic oxide may absorb. After that, by drying it at 100 to 250°C for 10 minutes to 15 hours, then calcining at 350 to 600°C for 10 minutes to 5 hours, the noble metal-supported refractory inorganic oxide, where the noble metal is supported on the refractory inorganic oxide, may be produced.

Next, the catalyst is obtained by dissolving/dispersing this noble metal-supported refractory inorganic oxide, the thin-plate-like ceria and the other oxides into a suitable aqueous medium, and carrying out wet milling to obtain slurry, and then by immersing the three-dimensional structure into the slurry, to remove the excess slurry, and after that by drying and calcining. In this case, mixing ratio of the noble metal-supported refractory inorganic oxide, the thin-plate-like ceria and the other oxides is not especially limited, and such amount is preferable that is specified by the amount of the above catalytic active components. In addition, as for the suitable aqueous medium and the like, similar ones described in the above method (1) can be used. The wet milling of the noble metal-supported refractory inorganic oxide, the thin-plate-like ceria and the other oxides is also carried out by a usually known method, and is not especially limited, however, a ball mill or the like is preferably used. Alternatively, a conventionally known means such as a homogenizer, an ultrasonic dispersing apparatus, a sand mill, a jet mill, or a beads mill can also be used. In carrying out wet milling, slurry can also be prepared, wherein a part (for example, the noble metal-supported refractory inorganic oxide, the other oxides and the like) of the catalytic active components is wet milled in advance to prepare an intermediate slurry, and by adding the residual catalytic active component (for example, the thin-plate-like ceria or the like) to the resultant intermediate slurry, and then still more wet milling. It should be noted that, similarly, the immersion step of the three-dimensional structure in the slurry, and the drying and calcining steps are also carried out by the similar steps as described in the above method (1).

(3) Slurry is prepared by dissolving/dispersing, in advance, the thin-plate-like ceria, the refractory inorganic oxide and/or the other oxides into a suitable aqueous medium, and by wet milling this solution/dispersed solution. Next, a catalyst precursor is obtained by immersing the three-dimensional structure (for example, the honeycomb carrier) into the slurry, removing the excess slurry, drying and calcining. Next, the catalyst is obtained by charging and immersing this catalyst precursor into an aqueous solution, where the water-soluble noble metal salt was dissolved in water, removing the excess solution, and then drying and calcining. It should be noted that, in the method of (3), in the case where the catalyst for exhaust gas purification of the present invention does not use the noble metal, the refractory inorganic oxide, or the other oxides, a similar method is applicable, except that the above component not to be used is not added. In addition, terms are defined similarly as in the above method (1), unless otherwise specified.

In the above case, mixing ratio of the thin-plate-like ceria, the refractory inorganic oxide and/or the other oxides is not especially limited, and such amount is preferable that is specified by the amount of the above catalytic active components. In addition, as for the suitable aqueous medium and the like, similar ones described in the above method (1) can be used. The wet milling of the thin-plate-like ceria, the refractory inorganic oxide and/or the other oxides is also carried out by a usually known method, and is not especially limited, however, a ball mill or the like is preferably used. Alternatively, a conventionally known means such as a homogenizer, an ultrasonic dispersing apparatus, a sand mill, a jet mill, or a beads mill can also be used. In carrying out wet milling, slurry can be prepared, wherein a part (for example, the refractory inorganic oxide, the other oxides and the like) of the catalytic active components is wet milled in advance to prepare an intermediate slurry, and by adding the residual catalytic active component (for example, thin-plate-like ceria or the like) to the resultant intermediate slurry, and then still more wet milling. It should be noted that, similarly, the immersion step of the three-dimensional structure into the slurry, and the drying and calcining steps are also carried out by the similar steps as described in the above method (1).

Next, the catalyst is obtained by charging and immersing the catalyst precursor obtained above into an aqueous solution, where the water-soluble noble metal salt was dissolved in water, drying and calcining. In the present description, as the step for obtaining the aqueous solution, by dissolving the water-soluble noble metal salt into water, a similar method as described in the above (1) can be used. In addition, immersing condition of the catalyst precursor into the aqueous solution is not especially limited, as long as it is such condition that the noble metals in the aqueous solution and the catalyst precursor are mixed sufficiently uniformly, and the noble metals are sufficiently supported on the catalyst precursor under the next drying and calcining conditions. For example, after immersing the catalyst precursor into the aqueous solution, by drying it at 100 to 250°C for 10 minutes to 15 hours, then calcining at 350 to 600°C for 10 minutes to 5 hours, the catalyst for exhaust gas purification of the present invention, where the noble metals are supported on the catalyst precursor, may be produced.

(4) Slurry A is prepared by dispersing the thin-plate-like ceria into the aqueous medium, and wet milling this dispersing solution. Separately, slurry B is prepared by dissolving/dispersing the refractory inorganic oxide, the water-soluble noble metal salt and the other oxides into the suitable aqueous medium, and wet milling this solution/dispersing solution. Then, by mixing this slurry A and the slurry B, slurry C is obtained. The catalyst is obtained by immersing the three-dimensional structure (for example, the honeycomb carrier) into the slurry C, removing the excess slurry, and then drying and calcining. It should be noted that, in the method of (4), in the case where the catalyst for exhaust gas purification of the present invention does not use the noble metal, the refractory inorganic oxide, or the other oxides, a similar method is applicable, except that the above components not to be used are not added. In addition, terms are defined similarly as in the above method (1), unless otherwise specified.

In the preparation step for the slurry A, in the case where thin-plate-like ceria does not have such a size (the average diameter, equivalent to a circle of a planar direction, or the average thickness) as described above, it is particularly preferable that a dispersion solution of thin-plate-like ceria is wet milled. It is because the size can be adjusted to a desired one by milling. In the present description, a milling method is not especially limited, and a usually known method can be used. For example, a roll mill, a ball mill, a homogenizer, an ultrasonic dispersing apparatus, a sand mill, a jet mill, or a beads mill can be used. Preferably, the ball mill is used.

In the present description, in the case of carrying out milling of the dispersion solution of thin-plate-like ceria, as for the suitable aqueous medium and the like, similar ones described in the above method (1) can be used. Particularly, water is used preferably. In addition, the size of thin-plate-like ceria before milling is also not especially limited, however, in consideration of easiness of the milling, the average diameter equivalent to a circle of a planar direction, is preferably 2 to 1000 µm and more preferably 2 to 100 µm, and the thickness is preferably 0.01 to 10 µm and more preferably 0.01 to 2 µm. Amount of the thin-plate-like ceria to be added into the aqueous medium is also not especially limited, however, it is preferable that the thin-plate-like ceria is added into the aqueous medium in an amount to become the above specification. In addition, milling condition is also not especially limited, as long as it is such one that can adjust to a desired size. Specifically, it is preferable that the slurry A is prepared by dispersing the thin-plate-like ceria into the aqueous medium, and then wet milling preferably using a ball mill, at a temperature of 15 to 30°C for preferably 1 minute to 20 hours, more preferably 10 minutes to 10 hours, and still more preferably 30 minutes to 5 hours. Such condition that is described above provides the thin-plate-like ceria having a desired size by a simple step.

Similarly, in the preparation step for slurry B, it is preferable that the solution/dispersing solution of the refractory inorganic oxide, the water-soluble noble metal salt and the other oxides is wet milled. It is because the refractory inorganic oxide, the water-soluble noble metal salt and the other oxides can be mixed uniformly. In the present description, a milling method is not especially limited, and a usually known method can be used. For example, a roll mill, a ball mill, a homogenizer, an ultrasonic dispersing apparatus, a sand mill, a jet mill, or a beads mill can be used. Preferably, the ball mill is used. In the case of carrying out wet milling of the solution/dispersion solution of the refractory inorganic oxide, the water-soluble noble metal salt and the other oxides, as for the suitable aqueous medium, similar ones described in the above method (1) can be used. Particularly, water is used preferably. It should be noted that, the aqueous medium to be used in the preparation step for slurry A and the preparation step for slurry B may be the same one, or may be a different kind one, however, the same kind is preferable. It is because consideration on compatibility of the aqueous medium is not necessary in the later mixing step. Amount of the refractory inorganic oxide, the water-soluble noble metal salt and the other oxides to be added into the aqueous medium is not especially limited, and it is preferable that the refractory inorganic oxide, the water-soluble noble metal salt and the other oxides are added into the aqueous medium in an amount to become the above specification. Milling condition is not especially limited, and specifically, it is preferable that the refractory inorganic oxide, the water-soluble noble metal salt and the other oxides are dissolved/dispersed into the aqueous medium in the predetermined amount, and then wet milled preferably using a ball mill, at a temperature of preferably 15 to 30°C for preferably 30 minutes to 20 hours, to prepare the slurry B. Under such condition that is described above, the refractory inorganic oxide, the water-soluble noble metal salt and the other oxides can be mixed uniformly.

By mixing the slurry A and the slurry B prepared in this way, slurry C is obtained. In the present description, mixing ratio of the slurry A and the slurry B is not especially limited, as long as it is such amount that desired amount is supported on the three dimensional structure, and may be adjusted as appropriate.

Next, the catalyst is obtained by immersing the three-dimensional structure (for example, the honeycomb carrier) into the slurry C, removing the excess slurry, and then by drying and calcining. In this case, immersing condition of the three-dimensional structure into the slurry C is not especially limited, as long as it is such condition that the catalytic active components in the slurry are sufficiently contacted with the three-dimensional structure and these catalytic active components are sufficiently supported onto the three-dimensional structure in the next drying and calcining steps. For example, after immersing the three-dimensional structure into the slurry C, the three-dimensional structure is pulled up from the slurry C to remove excess slurry. After that, by drying it at 100 to 250°C for 10 minutes to 3 hours, then calcining at 350 to 600°C for 10 minutes to 5 hours, the catalyst for exhaust gas purification of the present invention, where the catalytic active components are supported on the three-dimensional structure, may be produced

Among the above preparation methods, the methods (1), (2) and (4) are used preferably.

The catalyst for exhaust gas purification of the present invention can purify exhaust gas efficiently by making contacted with exhaust gas from, for example, fuel containing gasoline. In addition, the catalyst for exhaust gas purification of the present invention can be used suitably also for exhaust gas which contains moisture and fluctuates between oxidizing atmosphere and reducing atmosphere. In the present description, "containing moisture" means that moisture content in exhaust gas is 2 to 15% by volume, and preferably, moisture content in exhaust gas is 4 to 13% by volume.

In addition, "exhaust gas fluctuates between oxidizing atmosphere and reducing atmosphere" means a state where exhaust gas fluctuates among the oxidation state, the reduction state and the stoichiometric state, provided that, as for balance between oxidation components (oxygen and NOx) contained in exhaust gas and components to be oxidized (HC, CO, hydrogen), the case where the oxidation components are rich is defined as an oxidizing state; the case where the components to be oxidized are rich is defined as a reduction state; and the case where amounts of both are the same is defined as a stoichiometric state. In addition, gaseous components in exhaust gas are composed of a hydrocarbon (HC), carbon monoxide (CO), nitrogen oxide (NOx), carbon dioxide, hydrogen, nitrogen, and residual oxygen and the like. If fuel is not combusted completely even in the stoichiometric state, fuel and oxygen results in remaining in exhaust gas.

Therefore, the catalyst for exhaust gas purification of the present invention may be used for purification of exhaust gas (in particular, NOx) of an internal combustion engine. In particular, the catalyst for exhaust gas purification of the present invention can be used as, what is called a NOx trapping catalyst, which stores NOx in oxidizing atmosphere, and discharges and reduces NOx in reducing atmosphere.

That is, the present invention also provides a method for purifying exhaust gas comprising a step for making exhaust gas contacted to the catalyst for exhaust gas purification of the present invention.

In the above method, space velocity (S.V.) of exhaust gas is 10,000 to 300,000 h⁻¹, and preferably 10,000 to 100,000h⁻¹.

As described above, the catalyst for exhaust gas purification of the present invention can be used for purifying exhaust gas of an internal combustion engine such as a gasoline engine or a diesel engine. That is, purification of exhaust gas is carried out by installing the catalyst for exhaust gas purification in exhaust gas. In the present invention, an installation position of the catalyst for exhaust gas purification of the present invention is not especially limited, however, purification of exhaust gas can be carried out by installing the catalyst for exhaust gas purification of the present invention at the upstream side of exhaust gas, and installing a three-way catalyst or a hydrocarbon adsorbing agent at the downstream side; or by installing the three-way catalyst or the hydrocarbon adsorbing agent at the upstream side of exhaust gas, and installing the catalyst for exhaust gas purification of the present invention at the downstream side of exhaust gas, and the like. Adoption of such a method is capable of purifying exhaust gas efficiently.

### EXAMPLES

Explanation will be given on effect of the present invention with reference to the following Examples and Comparative Example. However, technical scope of the present invention should not be limited to the following Examples.

### (Example 1)

20g of the thin-plate-like ceria, having an average diameter equivalent to a circle of a planar direction, of 40 µm, and an average thickness of 0.1 µm, and 80 g of water were mixed, which mixture was wet milled at room temperature for 30 minutes using a ball mill to obtain an aqueous slurry A. It should be noted that, the average diameter equivalent to a circle of a planar direction of the thin-plate-like ceria contained in the aqueous slurry A was 4.8 µm.
Separately, 227 g of heat resistant activated alumina (BET=136 m²/g, average thickness=15 µm), 41 g of potassium nitrate, an aqueous solution of dinitrodiammine platinum containing 3 g of platinum, and 250 g of water were mixed, and by subjecting it to wet milling using a ball mill at room temperature for 15 hours, an aqueous slurry B was obtained.

The aqueous slurry A and slurry B obtained in this way were mixed to obtain slurry C. Into this slurry C, a commercial cordierite-type monolithic honeycomb carrier (400 cells/inch², diameter 24 mm, length 66 mm, volume 0.030 L) was immersed, and excess slurry was blown off by compressed air. Then, it was dried for 10 minutes, till there is no moisture reduction amount at 150°C, and calcined still more at 500°C for 2 hours in an electric furnace to obtain a completed catalyst (A). This catalyst supported 3 g/L of platinum, 20 g/L of the thin-plate-like ceria, 19 g/L of potassium oxide, and 227 g/L of alumina, relative to the carrier.

### (Example 2)

A completed catalyst (B) was obtained according to a similar method as in Example 1, except that milling time in obtaining the slurry A was set at 90 minutes, in Example 1. It should be noted that, the average diameter equivalent to a circle of a planar direction of the thin-plate-like ceria contained in the aqueous slurry A, was 4.3 µm. This catalyst supported 3 g/L of platinum, 20 g/L of the thin-plate-like ceria, 19 g/L of potassium oxide, and 227 g/L of alumina, relative to the carrier.

### (Example 3)

A completed catalyst (C) was obtained according to a similar method as in Example 1, except that milling time in obtaining the slurry A was set at 150 minutes, in Example 1. It should be noted that, the average diameter equivalent to a circle of a planar direction of the thin-plate-like ceria contained in the aqueous slurry A, was 2.7 µm. This catalyst supported 3 g/L of platinum, 20 g/L of the thin-plate-like ceria, 19 g/L of potassium oxide, and 227 g/L of alumina, relative to the carrier.

### (Comparative Example 1)

A completed catalyst (X) was obtained according to a similar method as in Example 1, except that a particle-like ceria with the average particle diameter of 10µm was used instead of the thin-plate-like ceria, in Example 1. This catalyst supported 3 g/L of platinum, 20 g/L of the thin-plate-like ceria, 19 g/L of potassium oxide, and 227 g/L of alumina, relative to the

### (Evaluation: A time course performance test)

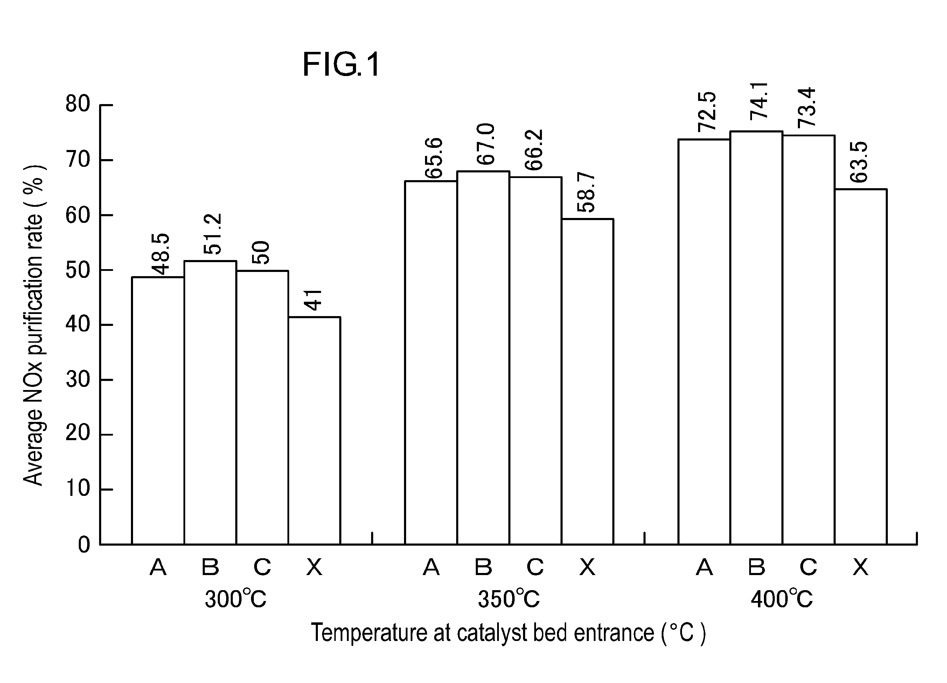

The following test was carried out on the completed catalysts (A) to (C) prepared in the Examples 1 to 3, and the completed catalyst (X) prepared in Comparative Example 1. That is, firstly the catalyst was subjected to a durability test at 800°C for 50 hours in an electric furnace. After that, the catalyst was filled in a stainless reaction tube, and by introducing reaction gas with a composition shown in the following Table 1, so that space velocity becomes 60,000 hr⁻¹, average NOx purification rate (%) at a temperature of catalyst bed entrance of 300°C, 350°C and 400°C was measured to evaluate catalyst performance. Results are shown in the following Table 2 and Fig. 1.

**(TABLE 1)**

| | Condition 1 (Reducing atmosphere) | Condition 2 (Oxidizing atmosphere) |
|---|---|---|
| C₃H₆ | 1%C | 4000 ppmC |
| CO | 3% | 2000 ppm |
| NO | 600 ppm | 600 ppm |
| O₂ | 1.1% | 10% |
| CO₂ | 7% | 7% |
| H₂O | 7% | 7% |
| Time | 10 sec | 50 sec |

**(TABLE 2)**

| | Average NOx purification rate at each entrance temperature of catalyst bed (%) | | |
|---|---|---|---|
| Catalyst | 300°C | 350°C | 400°C |
| A | 48.5 | 65.6 | 72.5 |
| B | 51.2 | 67.0 | 74.1 |
| C | 50.0 | 66.2 | 73.4 |
| X | 41.0 | 58.7 | 63.9 |

It should be noted that, the present application is based on Japanese Patent Application No. 2008-268762, filed on Oct. 17, 2008, and the disclosed content of which is hereby incorporated by reference in its entirety into this application.

### BRIEF DESCRIPTION OF THE DRAWINGS

Fig. 1 is a graph showing Evaluation: Average NOx purification rates (%) at a temperature of catalyst bed entrance of 300°C, 350°C and 400°C, on the completed catalysts (A) to (C) and (X), in a time course performance test.
Fig. 2 is a graph showing logarithmic differential pore volume distributions of the completed catalysts (B) and (X), in measurement of pore volume by mercury intrusion technique.

## Claims

1. A catalyst for exhaust gas purification comprising thin-plate-like ceria (CeO₂) as a catalytic active component.

2. The catalyst for exhaust gas purification according to claim 1, wherein the thin-plate-like ceria has an average diameter equivalent to a circle of a planar direction, of 2 to 50 µm, and an average thickness of 0.01 to 1 µm.

3. The catalyst for exhaust gas purification according to claim 1 or 2, further comprising a refractory inorganic oxide as the catalytic active component.

4. The catalyst for exhaust gas purification according to any one of claims 1 to 3, further comprising an oxide of at least one kind of element selected from the group consisting of alkali metals, alkaline earth metals, rare earth elements, manganese and tungsten, as the catalytic active component.

5. The catalyst for exhaust gas purification according to any one of claims 1 to 4, further comprising a noble metal as the catalytic active component.

6. The catalyst for exhaust gas purification according to any one of claims 1 to 5, wherein the catalytic active component covers a three-dimensional structure.

7. The catalyst for exhaust gas purification according to claim 6, wherein supported amount of the catalytic active component is 10 to 400 g per 1 L of the three-dimensional structure.

8. A method for producing the catalyst for exhaust gas purification, comprising:
(1) dispersing the catalytic active component comprising the thin-plate-like ceria (CeO₂) into an aqueous medium and carrying out wet milling to obtain slurry, and then immersing the three-dimensional structure into the resultant slurry, removing the excess slurry, drying and calcining;
(2) dispersing a noble metal-supported refractory inorganic oxide and the thin-plate-like ceria (CeO₂) into the aqueous medium, carrying out wet milling to obtain slurry, and then immersing the three-dimensional structure into the slurry, removing the excess slurry, drying and calcining;
(3) dispersing a refractory inorganic oxide and the thin-plate-like ceria (CeO₂) into the aqueous medium, carrying out wet milling to obtain slurry, then immersing the three-dimensional structure into the slurry, removing the excess slurry, drying and/or calcining, then immersing the three-dimensional structure obtained by drying/calcining in this way into an aqueous solution of a water-soluble noble metal salt, removing the excess aqueous solution, drying and calcining; or
(4) mixing slurry obtained by dispersing the thin-plate-like ceria (CeO₂) into the aqueous medium and then wet milling and slurry obtained by dispersing other catalytic active components into the aqueous medium and wet milling, immersing the three-dimensional structure into the resultant mixture, removing the excess mixture, drying and calcining.

9. A method for purifying exhaust gas comprising a step for making exhaust gas contacted, to the catalyst for exhaust gas purification according to any one of claims 1 to 7 or the catalyst for exhaust gas purification produced by the production method according to claim 8.
